# EUROPÄISCHE PATENTSCHRIFT

(11) **EP 1 704 307 B1**
(45) Veröffentlichungstag und Bekanntmachung des Hinweises auf die Patenterteilung: **14.11.2007**
(21) Anmeldenummer: 04819626.5
(22) Anmeldetag: 27.11.2004
(51) Int. Cl.: F01N 3/00

(54) **ABGASREINIGUNGSANLAGE FÜR EIN KRAFTFAHRZEUG MIT EINEM REDUKTIONSMITTELVORRATSBEHÄLTER UND BETRIEBSVERFAHREN HIERFÜR**
EXHAUST GAS PURIFICATION SYSTEM FOR A MOTOR VEHICLE COMPRISING A REDUCING AGENT STORAGE VESSEL AND OPERATING METHOD THEREFOR
INSTALLATION D'EPURATION DES GAZ D'ECHAPPEMENT POUR AUTOMOBILE, EQUIPEE D'UN RESERVOIR D'AGENT REDUCTEUR ET PROCEDE D'EXPLOITATION CORRESPONDANT

(30) Priorität: 06.12.2003 DE 10357120
(43) Veröffentlichungstag der Anmeldung: 27.09.2006
(73) Patentinhaber: DaimlerChrysler AG, 70327 Stuttgart (DE)
(72) Erfinder: DUVINAGE, Frank, 73230 Kirchheim (DE); GOERIGK, Christian, 71404 Korb (DE); KEPPELER, Berthold, 73277 Owen (DE); NOLTE, Arno, 70188 Stuttgart (DE); PAULE, Markus, 71404 Korb (DE); SCHOMMERS, Joachim, D-71573 Allmersbach (DE)
(86) Internationale Anmeldenummer: PCT/EP2004/013477
(87) Internationale Veröffentlichungsnummer: WO 2005/054636

(56) Entgegenhaltungen:
- EP-A- 0 381 236
- EP-A- 1 092 466
- EP-A- 1 199 449
- EP-A- 1 211 394
- DE-A1- 4 423 003
- DE-A1- 19 946 902
- US-A- 5 665 318
- US-A1- 2002 081 239
- US-A1- 2002 134 074
- US-A1- 2003 068 255
- US-B1- 6 192 676
- PATENT ABSTRACTS OF JAPAN Bd. 017, Nr. 671 (M-1525), 10. Dezember 1993 (1993-12-10) & JP 05 222923 A (HINO MOTORS LTD), 31. August 1993 (1993-08-31)
- PATENT ABSTRACTS OF JAPAN Bd. 018, Nr. 408 (M-1647), 29. Juli 1994 (1994-07-29) & JP 06 117224 A (MITSUBISHI MOTORS CORP), 26. April 1994 (1994-04-26)

## Beschreibung

Die Erfindung betrifft eine Abgasreinigungsanlage für ein Kraftfahrzeug, für welches vorgegebene Wartungsintervalle vorgesehen sind, mit einem Reduktionsmittelvorratsbehälter zur Bevorratung eines für die Abgasreinigung vorgesehenen Reduktionsmittels und ein Verfahren zum Betreiben eines Kraftfahrzeugs mit einer Abgasreinigungsanlage nach dem Oberbegriff des Anspruchs 4.

Abgasreinigungsanlagen der genannten Art sind insbesondere für Kraftfahrzeuge mit Dieselmotorantrieb bekannt, welche über einen sogenannten SCR-Katalysator zur Entfernung von Stickoxiden aus dem Abgas verfügen. Dieser ermöglicht die Reduzierung von Stickoxiden aus dem ihm zugeführten Abgas auch unter oxidierenden Bedingungen, das heißt bei einem Abgas, welches einen Sauerstoffüberschuss aufweist. Voraussetzung hierfür ist jedoch, dass dem Abgas ein selektiv hinsichtlich der Stickoxidreduzierung wirksames Reduktionsmittel zugeführt wird. Hierfür kommen unter anderem hauptsächlich Ammoniak sowie Substanzen, welche Ammoniak freisetzen können in Frage. Gebräuchlich sind insbesondere Harnstoff oder Ammoniumcarbamat, die vorzugsweise als wässrige Lösung in einem entsprechenden Behälter im Kraftfahrzeug mitgeführt werden. Dieses Reduktionsmittel stellt somit einen zusätzlichen Betriebsstoff dar, der regelmäßig nachgefüllt werden muss, um die Abgasreinigungsfunktion dauerhaft zu gewährleisten. Dies bedeutet einen Zusatzaufwand und erfordert eine sachgemäße Handhabung, um damit verbundene Risiken, beispielsweise durch einen fehlerhaften Umgang mit dem Reduktionsmittel, möglichst gering zu halten.

Aufgabe der Erfindung ist es daher, eine Abgasreinigungsanlage für ein Kraftfahrzeug sowie ein Verfahren zum Betrieb eines Kraftfahrzeugs mit einer Abgasreinigungsanlage anzugeben, durch welche ein sachgerechter und ökonomischer Umgang mit einem für die Abgasreinigung vorgesehenen Reduktionsmittel gewährleistet ist.

Diese Aufgabe wird mit einer Abgasreinigungsanlage mit den Merkmalen des Anspruchs 1 und mit einem Verfahren mit den Merkmalen des Anspruchs 4 erreicht.

Die erfindungsgemäße Abgasreinigungsanlage zeichnet sich dadurch aus, dass die Füllkapazität des Reduktionsmittelbehälters so gewählt ist, dass sie mindestens eine durch einen angenommenen Reduktionsmittelverbrauch im Wartungsintervall vorgegebene Größe aufweist.

Für Kraftfahrzeuge sind allgemein typischerweise Wartungsintervalle vorgesehen, nach deren Ablauf Verschleißteile gewartet und/oder Verbrauchsmittel gewechselt oder ergänzt werden. Bei einigen Verbrauchsmitteln, wie beispielsweise Wischwasserflüssigkeiten ist es zweckmäßig, wenn eine Ergänzung auch vom Halter oder Fahrer des Kraftfahrzeugs selbst vorgenommen werden kann. Bei anderen Verbrauchsmitteln, wie beispielsweise dem Getriebeöl, ist dies dagegen oftmals nicht wünschenswert, weil beispielsweise die Gefahr einer unsachgemäßen Handhabung gegeben ist. Dies trifft auch für die Reduktionsmittel zu, welche zu Abgasreinigungszwecken eingesetzt und im Fahrzeug mitgeführt werden. Hauptsächlich kommen als Reduktionsmittel eine wässrige Lösung von Harnstoff oder Ammoniumcarbamat in Betracht, bei denen eine unsachgemäße Handhabung, beispielsweise durch versehentliches Trinken oder Verschütten vermieden werden muss. Außerdem ist es wünschenswert, einen Fahrzeughalter von der Kontrolle der Verfügbarkeit des zusätzlichen Betriebsmittels zu entlasten, insbesondere auch deshalb, weil bei mangelnder Sorgfalt das Reduktionsmittel unter Umständen nicht rechtzeitig nachgefüllt wird und damit eine Abgasreinigung nicht mehr stattfinden kann. Durch die erfindungsgemäße Dimensionierung des Reduktionsmittelbehälters in Bezug auf die Wartungsintervalle des Fahrzeugs werden diese Risken vermieden.

Als Wartungsintervall wird hier ein sich an einer Laufstrecke oder einer Laufzeit orientierendes Intervall zwischen vorschriftsmäßigen Werkstattaufenthalten verstanden, wie sie üblicherweise zur Aufrechterhaltung des ordnungsgemäßen Betriebs des Kraftfahrzeugs vorgesehenen sind. Diese werden zweckmäßigerweise vom Fahrzeughersteller nach gewissen Kriterien vorgegeben. Die erfindungsgemäße Dimensionierung des Reduktionsmittelbehälters macht eine Ergänzung des Reduktionsmittels innerhalb der Wartungsintervalle unnötig, da der Reduktionsmittelbehälter so dimensioniert ist, dass er mindestens eine Reduktionsmittelmenge aufnehmen kann, wie sie innerhalb eines Wartungsintervalls voraussichtlich benötigt wird. Es ist daher möglich, die Ergänzung des Reduktionsmittels ausschließlich bei Werkstattaufenthalten im Rahmen der dabei vorgesehen turnusmäßigen Wartungsarbeiten durch hierfür geschultes Personal vorzunehmen. Die Notwendigkeit einer Bevorratung des Reduktionsmittels beim Fahrzeughalter sowie die Nachfüllung des Reduktionsmittels durch den Fahrzeughalter entfällt. Damit entfallen auch die damit verbundenen Risiken sowie der Zusatzaufwand für den Fahrzeughalter. Außerdem entfällt der Aufwand für den Aufbau einer entsprechend aufwändigen flächendeckenden Versorgungsinfrastruktur.

In Ausgestaltung der Erfindung weist der Reduktionsmittelbehälter eine zu Nachfüllzwecken zu öffnende Verschlussvorrichtung auf, wobei die Verschlussvorrichtung gegen ein Öffnen außerhalb eines nach Ablauf des Wartungsintervalls von hierzu befugtem Wartungspersonal vorzunehmenden Wartungsvorgangs gesichert ist. Somit wird vermieden, dass eine Ergänzung des Reduktionsmittels durch ungeschultes Personal vorgenommen wird, und die damit verbundenen Risiken werden vermieden. Vorzugsweise ist der Reduktionsmittelbehälter mit einem speziellen Verschluss versehen, der ausschließlich von geschultem bzw. hierzu befugten Wartungspersonal geöffnet werden kann. Vorteilhaft ist beispielsweise ein elektronisch codierter Verschluss, der nur von hierzu befugtem Personal entriegelt und geöffnet werden kann. Der Umgang mit dem Reduktionsmittel verbleibt somit in den Händen dieses Fachpersonals und eine Gefährdung der Umwelt, von Gegenständen und Personen wird vermieden. Dadurch, dass die Füllstandsüberwachung nicht mehr dem Fahrzeughalter obliegt, wird außerdem vermieden, dass beispielsweise aus Gründen der Kostenersparnis eine Nachfüllung des Reduktionsmittels unterbleibt, obwohl sie notwendig wäre.

In weiterer Ausgestaltung der Erfindung ist eine Füllstandsüberwachung für die im Reduktionsmittelbehälter vorhandene Reduktionsmittelmenge vorgesehen, derart, dass bei Unterschreiten einer sich aus der verbleibenden Laufzeit bis zum Ablauf des Wartungsintervalls und einer angenommenen Verbrauchsrate ergebenden Restfüllmenge ein Hinweissignal ausgegeben wird. Der Fahrer des Kraftfahrzeugs wird demnach über einen kritisch abgesunkenen Füllstand informiert. Damit wird der Tatsache Rechnung getragen, dass durch unvorhersehbare Umstände bereits vor Ablauf eines üblicherweise auf Grund anderer Kriterien vorgesehenen Wartungsintervalls ein Nachfüllbedarf gegeben sein kann. Dies ist als gleichbedeutend mit dem Ablauf eines Wartungsintervalls anzusehen.

Das erfindungsgemäße Verfahren zeichnet sich dadurch aus, dass bei einem Reduktionsmittelvorratsbehälter zur Bevorratung eines zur Abgasreinigung vorgesehenen Reduktionsmittels eine Verschlusseinrichtung des Reduktionsmittelvorratsbehälters gegen ein Öffnen innerhalb der Wartungsintervalle verriegelt wird und bei einem Wartungsvorgang nach Ablauf des Wartungsintervalls zur Nachfüllung des Reduktionsmittels entriegelt und geöffnet wird. Innerhalb des Wartungsintervalls kann somit der Reduktionsmittelbehälter nicht geöffnet werden und es ist sichergestellt, dass die Nachfüllung des Reduktionsmittels im Rahmen der vorgesehenen Wartungen zum Beispiel in einer Vertragswerkstatt vorgenommen wird.

In Ausgestaltung des Verfahrens wird die Füllmenge des Reduktionsmittels im Reduktionsmittelbehälter ermittelt und bei Unterschreitung eines vorgebbaren Mindestfüllwerts ein Hinweissignal ausgegeben. Somit wird ein Nachfüllbedarf bzw. die Notwendigkeit einer außerplanmäßigen Wartung aufgrund eines zu geringen Füllstands rechtzeitig angezeigt.

In weiterer Ausgestaltung des Verfahrens wird eine Verbrauchsrate des Reduktionsmittels ermittelt und daraus die bis zum Ablauf des Wartungsintervalls zu erwartende Verbrauchsmenge des Reduktionsmittels ermittelt und für den Fall, dass die zu erwartende Verbrauchsmenge die Füllmenge überschreitet, ein Hinweissignal ausgegeben. Diese Vorgehensweise ermöglicht eine realistische Abschätzung über den voraussichtlichen Zeitpunkt des Nachfüllens. Die Ausgabe eines Warnsignals kann dabei auch unterbleiben, wenn die verbleibende Zeit oder Laufstrecke bis zum ermittelten Zeitpunkt des Nachfüllens länger ist als die Zeit, die bis zur Durchführung einer vorschriftsmäßigen Wartung ohnehin vorgesehen ist.

In weiterer Ausgestaltung des Verfahrens werden nach Überschreitung einer vorgebbaren Laufstrecke des Kraftfahrzeugs mit Hinweissignalausgabe Eingriffe in den Betrieb des Kraftfahrzeugs derart vorgenommen, dass eine verminderte Verbrauchsrate des Reduktionsmittels resultiert. Auf eine Missachtung des Hinweissignals zur Notwendigkeit der Reduktionsmittelnachfüllung wird somit ein Notlaufbetrieb eingestellt. Bei diesem wird der Reduktionsmittelverbrauch reduziert, so dass sich die ansonsten verbleibende Reichweite erhöht. Vorzugsweise wird der Reduktionsmittelverbrauch derart vermindert, dass eine vorgebbare Mindestabgasreinigungsfunktion noch gegeben ist. Als zusätzliche Maßnahme kann ein Eintrag in einen auslesbaren Fehlerspeicher vorgenommen werden. Für den Fall, dass eine vorgebbaren Laufstrecke des Kraftfahrzeugs mit Hinweissignalausgabe überschritten wird, kann auch vorgesehen sein, die Fahrbarkeit des Fahrzeugs beispielsweise durch Aktivieren eine vorgebbaren Geschwindigkeitsbegrenzung oder Drehzahlbegrenzung einzuschränken

Nachfolgend werden vorteilhafte Ausführungsformen der Erfindung anhand von Beispielen beschrieben. Dabei wird beispielhaft ein Kraftfahrzeug mit einem Dieselmotor und einer Abgasreinigungsanlage, welche einen sogenannten SCR-Katalysator umfasst, betrachtet.

Der SCR-Katalysator ist vorzugsweise zur Verminderung von Stickoxiden unter Einsatz eines selektiven Reduktionsmittels ausgelegt. Dies kann beispielsweise flüssiges Ammoniak oder Harnstoff sein. Nachfolgend wird davon ausgegangen, dass es sich um Harnstoff, vorzugsweise in Form einer wässrigen Lösung handelt, der in einem hierfür vorgesehenen Behälter mit dem Kraftfahrzeug mitgeführt wird. Nachfolgend wird verallgemeinernd von einem Harnstoffbehälter gesprochen.

Für das Kraftfahrzeug sind Wartungsintervalle vorgesehen, nach deren Ablauf vorgeschriebene Wartungsarbeiten, wie beispielsweise ein Getriebe- bzw. Motorölwechsel vorzunehmen sind. Die Durchführung der Wartungsarbeiten erfolgt dabei in einer hierfür autorisierten Werkstatt. Die vorgesehenen Wartungsintervalle können von unterschiedlicher Dauer sein und orientieren sich hauptsächlich an der Laufstrecke des Fahrzeugs in Verbindung mit Verbrauchszeiten von Verbrauchsstoffen oder von Lebensdauern verschiedener verschleißbehafteter Bauteile.

Erfindungsgemäß weist der Harnstoffbehälter eine Größe auf, die sich aus dem voraussichtlichen Harnstoffbedarf in einem Wartungsintervall bestimmt. Je nach den gegebenen Verhältnissen, wie beispielweise dem verfügbaren Bauraum, ist es zweckmäßig, sich an längeren oder kürzeren Wartungsintervallen zu orientieren. Dabei wird der Harnstoffbedarf innerhalb des Wartungsintervalls vorzugsweise aus der Stickoxidemission des Motors und der mittels des Harnstoffeinsatzes zu erzielenden Stickoxidverminderung ermittelt. Da die Stickoxidemission des Motors von den Fahrbedingungen abhängig ist, ist es wiederum zweckmäßig, sich an der maximal im Wartungsintervall zu erwartenden Gesamtstickoxidemission zu orientieren. Alternativ kann es vorgesehen sein, von der mit einer vorgebbaren Wahrscheinlichkeit auftretenden Stickoxidemission im Wartungsintervall auszugehen. Dabei können statistische Aussagen über die Wahrscheinlichkeit von Fahrprofilen und damit verbundenen Stickoxidemissionen herangezogen werden.

Für den solcherart dimensionierten Harnstoffbehälter ist zweckmäßigerweise eine Füllstandsüberwachungseinrichtung vorgesehen. Diese kann einerseits das Auftreten eines vorgebbaren Mindestfüllstands feststellen und bei Erreichen dieses Mindestfüllstands die Ausgabe eine entsprechenden Warnsignals veranlassen. Vorzugsweise wird mit dem Warnsignal gleichzeitig eine Information über die voraussichtlich verbleibende Restlaufzeit oder Restlaufstrecke ausgegeben. Andererseits kann die Füllstandsüberwachungseinrichtung auch laufend den aktuellen Füllstand feststellen und den seitherigen Verbrauch in Relation zu den jeweils vorhandenen Motorbetriebsparametern bzw. dem Stickoxidausstoß des Motors setzen. Auf diese Weise kann die verbleibende Restlaufzeit mit hoher Genauigkeit abgeschätzt werden. Wird festgestellt, dass eine Nachfüllung voraussichtlich vor dem Ende des regulär ohnehin vorgesehenen Wartungsintervalls fällig ist, so wird dies ebenfalls gemeldet und vorzugsweise der Ablauf des Wartungsintervalls entsprechend der Restlaufzeit neu festgesetzt. Zur Ausgabe der genannten Informationen kann eine übliche Anzeigeeinheit vorgesehen sein.

Falls eine Nachfüllung nicht wie angezeigt erfolgt, ist es zur Aufrechterhaltung einer vorgebbaren Mindestfunktion der Abgasreinigungseinrichtung vorteilhaft, den Fahrzeugbetrieb auf einen Notlauf umzustellen. Dieser kann in einem Verbot bestimmter Motorbetriebspunkte mit einer vorgebbaren erhöhten Stickoxidrohemission bestehen. Alternativ oder zusätzlich können Motorbetriebskennfelder umgestellt werden, so dass eine geringere Stickoxidemission des Motors erfolgt, auch wenn dies beispielsweise zu Lasten des Kraftstoffverbrauch geht. Auf diese Weise wird die verbleibende Restlaufzeit für die noch verfügbare Harnstoffmenge gestreckt. In diesem Zusammenhang kann es ebenfalls vorgesehen sein, die Harnstoffdosierstrategie derart zu ändern, dass die Stickoxidverminderung zwar verringert wird, jedoch einen vorgebbaren Wert nicht unterschreitet. Auf diese Weise kann eine bei einem Harnstoffmangel oder bei einem Leerlaufen des Harnstoffbehälters vermehrt auftretende Abgabe von Stickoxiden an die Umwelt zumindest begrenzt werden. Um die Dringlichkeit einer Nachfüllung deutlich zu machen, kann auch vorgesehen sein, die Fahrbarkeit des Fahrzeugs einzuschränken, beispielsweise durch eine automatisch einsetzende Geschwindigkeitsbegrenzung und/oder Drehzahlbegrenzung, vorzugsweise in Verbindung mit der Anzeige einer diesbezüglichen Meldung. Die Begrenzungen können auch gleitend gestaltet sein und mit zunehmender Knappheit des Reduktionsmittels an Ausmaß zunehmen.

Wird der Harnstoffbehälter völlig leergefahren, kann auch vorgesehen sein, nach dem darauffolgenden Abstellen des Fahrzeugs einen Neustart durch eine entsprechende Sperre zu verhindern. Auf diese Weise wird verhindert, dass das Fahrzeug ohne Abgasreinigungsfunktion weiterhin am Straßenverkehr teilnimmt. Vorzugsweise ist es jedenfalls vorgesehen, einen Fehlbetrieb oder Mangelbetrieb hinsichtlich der Harnstoffdosierung durch Abspeichern der entsprechenden Information in einem auslesbaren Fehlerspeicher abzuspeichern.

Für den Harnstoffbehälter ist erfindungsgemäß eine spezielle Nachfüllöffnung vorgesehen. Diese zeichnet sich durch einen Verschluss aus, der gegen ein unbefugtes Öffnen insbesondere im Wartungsintervall gesichert ist. Vorzugsweise ist dieser Verschluss so beschaffen, dass er nur im Zuge der vorgesehenen Wartungsarbeiten nach Ablauf eines Wartungsintervalls geöffnet werden kann und ansonsten verriegelt ist. Hierzu ist es vorteilhaft, eine beispielsweise softwaremäßig gesteuerte Sperre vorzusehen, welche lediglich durch Eingabe eines Codes gelöst werden kann und dadurch die Nachfüllöffnung freigibt, wobei der Code beispielsweise nur hierfür autorisierten Werkstätten zur Verfügung steht. Vorteilhaft ist es auch, für diese Sperre eine Verbindung mit einem elektronischen Steuer- oder Diagnosegerät vorzusehen. Über einen geeigneten Anschluss, beispielsweise einen hierfür vorgesehenen Adapter, welcher vorzugsweise ausschließlich Werkstattpersonal einer hierfür autorisierten Werkstatt zur Verfügung steht, kann dann die Sperre entriegelt werden. Um diese Funktion sicherzustellen, kann es ebenfalls vorgesehen sein, die Eingabe eines Codes erforderlich zu machen. Alternativ kann für den Verschluss auch ein Spezialschlüssel oder ein Spezialwerkzeug vorgesehen sein, welches ausschließlich hierfür berechtigtem Personal zur Verfügung steht. Im einfachsten Fall kann auch mittels einer Plombierung ein unbefugtes Öffnen des Verschlusses unterbunden werden.

Durch diese geschilderten Maßnahmen wird erreicht, dass eine Nachfüllung des Harnstoffbehälters nur von hierfür befugtem und geschultem Personal, vorzugsweise einer Vertragswerkstatt vorgenommen werden kann. Dadurch wird ein unsachgemäßer oder fehlerhafter Umgang mit dem Reduktionsmittel, wie beispielsweise eine Fehlbetankung, ein Verschütten oder eine versehentliche Einnahme vermieden. Neben der geschilderten Sicherheitsfunktion wird zudem eine Vereinfachung für den Fahrzeughalter oder Fahrer des Kraftfahrzeugs erreicht, da dieser von der Aufgabe entbunden wird, selbst die Nachfüllung des Harnstoffbehälters durchführen zu müssen.

## Patentansprüche

1. Abgasreinigungsanlage für ein Kraftfahrzeug, für welches vorgegebene Wartungsintervalle vorgesehen sind, mit einem Reduktionsmittelvorratsbehälter zur Bevorratung eines für die Abgasreinigung vorgesehenen Reduktionsmittels,
**dadurch gekennzeichnet, dass**
die Füllkapazität des Reduktionsmittelbehälters so gewählt ist, dass sie mindestens eine durch einen angenommenen Reduktionsmittelverbrauch im Wartungsintervall vorgegebene Größe aufweist.

2. Abgasreinigungsanlage nach Anspruch 1,
**dadurch gekennzeichnet, dass**
der Reduktionsmittelbehälter eine zu Nachfüllzwecken zu öffnende Verschlussvorrichtung aufweist, wobei die Verschlussvorrichtung gegen ein Öffnen außerhalb eines nach Ablauf des Wartungsintervalls von hierzu befugtem Wartungspersonal vorzunehmenden Wartungsvorgangs gesichert ist.

3. Abgasreinigungsanlage an Anspruch 1 oder 2,
**dadurch gekennzeichnet, dass**
eine Füllstandsüberwachung für die im Reduktionsmittelbehälter vorhandene Reduktionsmittelmenge vorgesehen ist, derart, dass bei Unterschreiten einer sich aus der verbleibenden Laufzeit bis zum Ablauf des Wartungsintervalls und einer angenommenen Verbrauchsrate ergebenden Restfüllmenge ein Hinweissignal ausgegeben wird.

4. Verfahren zum Betreiben eines Kraftfahrzeugs mit einer Abgasreinigungsanlage und einem Reduktionsmittelvorratsbehälter zur Bevorratung eines zur Abgasreinigung vorgesehenen Reduktionsmittels, welches vorgegebene Wartungsarbeiten nach vorgegebenen Wartungsintervallen umfasst,
**dadurch gekennzeichnet, dass**
eine Verschlusseinrichtung des Reduktionsmittelvorratsbehälters gegen ein Öffnen innerhalb der Wartungsintervalle verriegelt wird und bei einem Wartungsvorgang nach Ablauf des Wartungsintervalls zur Nachfüllung des Reduktionsmittels entriegelt und geöffnet wird.

5. Verfahren nach Anspruch 4,
**dadurch gekennzeichnet, dass**
die Füllmenge des Reduktionsmittels im Reduktionsmittelbehälter ermittelt wird und bei Unterschreitung eines vorgebbaren Mindestfüllwerts ein Hinweissignal ausgegeben wird.

6. Verfahren nach Anspruch 5,
**dadurch gekennzeichnet, dass**
eine Verbrauchsrate des Reduktionsmittels ermittelt wird und daraus die bis zum Ablauf des Wartungsintervalls zu erwartende Verbrauchsmenge des Reduktionsmittels ermittelt wird und für den Fall, dass die zu erwartende Verbrauchsmenge die Füllmenge überschreitet, ein Hinweissignal ausgegeben wird.

7. Verfahren nach Anspruch 5 oder 6,
**dadurch gekennzeichnet, dass**
nach Überschreitung einer vorgebbaren Laufstrecke des Kraftfahrzeugs mit Hinweissignalausgabe Eingriffe in den Betrieb des Kraftfahrzeugs derart vorgenommen werden, dass eine verminderte Verbrauchsrate des Reduktionsmittels resultiert.

8. Verfahren nach Anspruch 5 oder 6,
**dadurch gekennzeichnet, dass**
nach Überschreitung einer vorgebbaren Laufstrecke des Kraftfahrzeugs mit Hinweissignalausgabe die Fahrgeschwindigkeit des Kraftfahrzeugs und/oder die Drehzahl des Antriebsmotors des Kraftfahrzeugs begrenzt wird.

## Claims

1. An exhaust gas purification system for a motor vehicle, for which predetermined maintenance intervals are provided, having a reducing agent storage tank for storing a reducing agent intended for the exhaust gas purification, **characterized in that** the filling capacity of the reducing agent tank is selected in such a way that it amounts to at least a level predetermined by an assumed reducing agent consumption during the maintenance interval.

2. The exhaust gas purification system as claimed in claim 1, **characterized in that** the reducing agent tank has a closure apparatus which is to be opened for topping-up purposes, the closure apparatus being protected against being opened outside a maintenance operation which is to be carried out by authorized maintenance staff after the maintenance interval has elapsed.

3. The exhaust gas purification system as claimed in claim 1 or 2, **characterized in that** level monitoring is provided for the purpose of monitoring the quantity of reducing agent that is present in the reducing agent tank, in such a manner that a warning signal is output when the level drops below a residual filling quantity which results from the remaining running time until the end of the maintenance interval and an assumed consumption rate.

4. A method for operating a motor vehicle having an exhaust gas purification system and a reducing agent storage tank for storing a reducing agent intended for exhaust gas purification, which comprises predetermined maintenance work after predetermined maintenance intervals, **characterized in that** a closure device for the reducing agent storage tank is locked such that it cannot be opened over the course of the maintenance intervals and is unlocked and opened during a maintenance operation after the end of the maintenance interval in order for the reducing agent to be topped up.

5. The method as claimed in claim 4, **characterized in that** the filling quantity of reducing agent in the reducing agent tank is determined, and a warning signal is output if this quantity drops below a predeterminable minimum filling level.

6. The method as claimed in claim 5, **characterized in that** a consumption rate for the reducing agent is determined, and this information is used to determine the reducing agent consumption quantity which is to be expected by the end of the maintenance interval, and a warning signal is output if the expected consumption quantity exceeds the filling quantity.

7. The method as claimed in claim 5 or 6, **characterized in that** after a predeterminable motor vehicle running distance with a warning signal being output has been exceeded, intervention measures are taken in the operation of the motor vehicle, in such a manner as to effect a reduced consumption rate for the reducing agent.

8. The method as claimed in claim 5 or 6, **characterized in that** after a predeterminable motor vehicle running distance with a warning signal being output has been exceeded, the driving speed of the motor vehicle and/or the rotational speed of the motor vehicle drive engine is restricted.

## Revendications

1. Installation d'épuration de gaz d'échappement pour un véhicule automobile pour lequel sont prévus des intervalles de révision ou d'entretien prédéterminés, comprenant un réservoir de stockage d'agent réducteur ou d'agent de réduction pour le stockage d'un agent de réduction prévu pour l'épuration du gaz d'échappement,
**caractérisée en ce que** la capacité de remplissage du réservoir d'agent de réduction est choisie de façon à présenter au moins une grandeur prédéfinie par une consommation supposée d'agent de réduction dans l'intervalle de révision.

2. Installation d'épuration de gaz d'échappement selon la revendication 1,
**caractérisée en ce que** le réservoir d'agent de réduction comprend un dispositif de fermeture à ouvrir à des fins de nouveau remplissage, le dispositif de fermeture étant sécurisé à l'encontre une ouverture en-dehors d'une opération de révision ou d'entretien à effectuer à l'issue de l'intervalle de révision par un personnel d'entretien qualifié et autorisé à cet effet.

3. Installation d'épuration de gaz d'échappement selon la revendication 1 ou 2,
**caractérisée en ce qu'**il est prévu une surveillance du niveau de remplissage pour la quantité d'agent de réduction se trouvant dans le réservoir d'agent de réduction de façon telle, que soit délivré un signal d'indication lors du passage sous un niveau correspondant à une quantité de remplissage restante résultant d'une durée de fonctionnement restante jusqu'à l'issue de l'intervalle de révision et d'un taux de consommation supposé.

4. Procédé pour faire fonctionner un véhicule automobile comprenant une installation d'épuration de gaz d'échappement et un réservoir de stockage d'agent de réduction pour le stockage d'un agent de réduction prévu pour l'épuration du gaz d'échappement, le procédé englobant des travaux d'entretien prescrits après des intervalles de révision prédéterminés,
**caractérisé en ce qu'**un dispositif de fermeture du réservoir de stockage d'agent de réduction est verrouillé à l'encontre d'une ouverture pendant les intervalles de révision, et est déverrouillé et ouvert lors d'une opération d'entretien à l'issue de l'intervalle de révision, en vue du nouveau remplissage d'agent de réduction.

5. Procédé selon la revendication 4,
**caractérisé en ce que** l'on détermine la quantité de remplissage de l'agent de réduction dans le réservoir d'agent de réduction, un signal indicateur étant délivré si le niveau passe sous une valeur de remplissage minimale pouvant être prescrite.

6. Procédé selon la revendication 5,
**caractérisé en ce que** l'on détermine un taux de consommation d'agent de réduction, à partir duquel on détermine la quantité de consommation d'agent de réduction attendue jusqu'à l'issue de l'intervalle de révision, et dans le cas où la quantité de consommation attendue dépasse la quantité ou le niveau de remplissage, on délivre un signal indicateur.

7. Procédé selon la revendication 5 ou 6,
**caractérisé en ce qu'**après dépassement d'une distance de fonctionnement ou de marche du véhicule automobile, pouvant être prescrite, l'émission d'un signal indicateur est effectuée avec intervention dans le fonctionnement du véhicule automobile de façon telle qu'il en résulte un taux de consommation réduit de l'agent de réduction.

8. Procédé selon la revendication 5 ou 6,
**caractérisé en ce qu'**après dépassement d'une distance de fonctionnement ou de marche du véhicule automobile, pouvant être prescrite, l'émission d'un signal indicateur s'accompagne de la limitation de la vitesse de marche du véhicule automobile et/ou de la vitesse de rotation du moteur d'entraînement du véhicule automobile.
